# EUROPEAN PATENT APPLICATION

(11) **EP 3 838 026 A1**
(43) Date of publication of application: **23.06.2021**
(21) Application number: 19218930.6
(22) Date of filing: 20.12.2019
(51) Int. Cl.: A24F 40/53, A24F 40/65, H04W 4/80

(54) **AEROSOL DELIVERY DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

The present disclosure relates to an aerosol delivery device comprising a main body. The main body has a control unit and a movement sensor configured to sense movement of the aerosol delivery device. The control unit is configured to send an advertising communication to a mobile device requesting Bluetooth pairing when a cartridge is coupled to the main body and a predetermined movement of the aerosol delivery device, e.g. a predetermined tapping sequence, is detected using the movement sensor.

## Description

### Technical field

The present disclosure relates to an aerosol delivery (e.g. smoking substitute) device and to a system including an aerosol-delivery (e.g. a smoking substitute) device.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful by-products. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices, which may also be known as electronic nicotine delivery devices, may comprise electronic systems that permit a user to simulate the act of smoking by producing an aerosol, also referred to as a "vapour", which is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vaporisable liquid, typically referred to (and referred to herein) as "e-liquid", is heated by a heater to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerine.

A typical vaping smoking substitute device includes a mouthpiece, a power source (typically a battery), a tank or liquid reservoir for containing e-liquid, as well as a heater. In use, electrical energy is supplied from the power source to the heater, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a heater and a sealed tank which is pre-filled with e-liquid and is not intended to be refilled by an end user. One subset of closed system vaping smoking substitute devices include a main body which includes the power source, wherein the main body is configured to be physically and electrically coupled to a component including the tank and the heater. In this way, when the tank of a component has been emptied, the device can be reused by connecting it to a new component. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e cigarette is a closed system device which includes a main body and a consumable component. The main body and consumable component are physically and electrically coupled together by pushing the consumable component into the main body. The main body includes a rechargeable battery. The consumable component includes a mouthpiece, a sealed tank which contains e-liquid, as well as a vaporiser, which for this device is a heating filament coiled around a portion of a wick which is partially immersed in the e-liquid. The device is activated when a microprocessor on board the device detects a user inhaling through the mouthpiece. When the device is activated, electrical energy is supplied from the power source to the vaporiser, which heats e-liquid from the tank to produce a vapour which is inhaled by a user through the mouthpiece.

Another example vaping smoking substitute device is the blu PRO™ e-cigarette. The blu PRO™ e cigarette is an open system device which includes a main body, a (refillable) tank, and a mouthpiece. The main body and tank are physically and electrically coupled together by screwing one to the other. The mouthpiece and refillable tank are physically coupled together by screwing one into the other, and detaching the mouthpiece from the refillable tank allows the tank to be refilled with e-liquid. The device is activated by a button on the main body. When the device is activated, electrical energy is supplied from the power source to a vaporiser, which heats e-liquid from the tank to produce a vapour which is inhaled by a user through the mouthpiece.

An alternative to the "vaping" approach is the so-called Heated Tobacco ("HT") approach in which tobacco (rather than an e-liquid) is heated or warmed to release vapour. HT is also known as "heat not burn" ("HNB"). The tobacco may be leaf tobacco or reconstituted tobacco. In the HT approach the intention is that the tobacco is heated but not burned, i.e. the tobacco does not undergo combustion.

The heating, as opposed to burning, of the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

A typical HT smoking substitute device may include a main body and a consumable component. The consumable component may include the tobacco material. The main body and consumable component may be configured to be physically coupled together. In use, heat may be imparted to the tobacco material by a heating element of the main body, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable component (entrained in the airflow) from the location of vaporization to an outlet of the component (e.g. a mouthpiece), the vapour cools and condenses to form an aerosol for inhalation by the user. The aerosol may contain nicotine and/or flavour compounds. The present inventor(s) have observed that most smoking substitute devices currently on the market are configured to operate in isolation of other devices, which limits the functions the smoking substitute devices can perform.

The present invention has been devised in light of the above considerations.

### Summary

According to a first aspect, there is provided an aerosol delivery device comprising a main body, the main body having a control unit, and a movement sensor configured to sense movement of the aerosol delivery device;
wherein the control unit is configured to send an advertising communication to a mobile device when:
a component is coupled to the main body; and
a predetermined movement of the aerosol delivery device is detected using the movement sensor.

In this way, a user can instruct the aerosol delivery device to attempt to pair (i.e. establish a communication link) with a mobile device by performing simple actions on the aerosol delivery device. A communication link between the aerosol delivery device and a mobile device may provide additional functions which the aerosol delivery device itself cannot perform.

Optional features will now be set out. These are applicable singly or in any combination with any aspect.

The advertising communication may a wireless advertising communication. The advertising communication may comprise a request to establish a communication link (e.g. a request to pair) with the mobile device.

The aerosol delivery device may be a smoking substitute device, for example.

The control unit may be configured to send the advertising communication to the mobile device only when the component is coupled to the main body, and the predetermined movement of the aerosol delivery device is detected using the movement sensor.

In this way, if the user does not couple the component to the main body and does not also perform the predetermined movement of the aerosol delivery device, the control unit does not send an advertising communication to the mobile device. Accordingly, a user can decide when, or if, they would like the aerosol delivery device to pair with the mobile device.

The main body may be configured to be physically coupled and/or electrically coupled to the component.

The control unit may be configured to send the advertising communication to the mobile device when the component is physically coupled to the main body. Alternatively or additionally, the control unit may be configured to send the advertising communication to the mobile device when the component is electrically coupled to the main body.

The control unit may be configured to detect whether the aerosol delivery device is in a disassembled state in which the component is not coupled to the main body, or an assembled state in which the component is coupled to the main body. Accordingly, the control unit may be configured to send the advertising communication when the control unit detects that the aerosol delivery device is in the assembled state (and thus that the component is coupled to the main body).

The control unit may be configured to detect a change in the state of the aerosol delivery device (i.e. a change between the disassembled state and the assembled state). In this way, the control unit may be configured to determine when the aerosol delivery device is moved from the disassembled state and the assembled state.

Accordingly, the control unit may be configured to send the advertising communication to the mobile device when a change in state of the aerosol delivery device is detected, the change in state being from a disassembled state in which the component is not coupled to the main body, to an assembled state in which the component is coupled to the main body.

Optionally, the control unit may be configured to send the advertising communication to the mobile device when the change in state of the aerosol delivery device is detected before the predetermined movement of the aerosol delivery device is detected.

Alternatively, the control unit may be configured to send the advertising communication to the mobile device when the change in state of the aerosol delivery device is detected after the predetermined movement of the aerosol delivery device is detected. In other embodiments, the control unit may be configured to send the advertising communication to the mobile device when the predetermined movement and the change in state of the aerosol delivery device are detected in either order.

Optionally, the control unit may be configured to send the advertising communication to the mobile device when the detection of the change in state of the aerosol delivery device and the detection of the predetermined movement of the aerosol delivery device are within a predetermined period of time.

The predetermined period of time may be 60 seconds or less, 30 seconds or less, 20 seconds or less, or 10 seconds or less, for example.

Preferably, the movement sensor may include at least one accelerometer. Optionally, the movement sensor may include one or more gyroscopes and/or magnetometers.

The aerosol delivery device may further comprise a source of power which may be a battery, or a capacitor.

The main body may house the power source and/or other electrical components. The main body may house the control unit.

Optionally, the predetermined movement detected using the movement sensor may include a tap of the aerosol delivery device (e.g. tapping the aerosol delivery device against a surface, such as the user's finger), and preferably includes a sequence of taps of the aerosol delivery device (e.g. a double tap, a triple tap, continuous taps etc.).

For example, the predetermined movement detected using the movement sensor may include a sequence of taps of the aerosol delivery device performed within a predetermined "tap sequence" length of time (e.g. within 5 seconds). For example, the predetermined movement may include 5 taps, wherein the 5 taps are performed within a predetermined "tap sequence" length of time (e.g. within 5 seconds).

In some embodiments, the aerosol delivery device may be configured to provide a first feedback indication to the user when both the predetermined movement is detected and the component is coupled to the main body. The first feedback indication may indicate to the user that the aerosol delivery device is searching for a mobile device using the advertising communication.

The aerosol delivery device may be configured to establish a communication link with an application installed on the mobile device. This communication link may pair the aerosol delivery device with the application installed on the mobile device. Communication can be, for example, over a short-range wireless network such as Bluetooth™. Other wireless communication networks may of course be used such as a cellular network (such as 3G or 4G) or a WiFi network.

The aerosol delivery device may further comprise a wireless interface, wherein the aerosol delivery device is configured to communicate wirelessly with the application installed on the mobile device through the communication link via the wireless interface.

The aerosol delivery device may be configured to provide a second feedback indication to the user when a communication link between aerosol delivery device and an application installed on the mobile device is established. This second feedback indication may indicate to the user that the aerosol delivery device is paired with the mobile device.

The first and/or second feedback indications may be visual feedback indications.

The front and/or rear surface of the main body may include visual user feedback means, for example one or more lights e.g. one or more LEDs.

In some embodiments, the main body may include an illumination region configured to allow light provided by a light source (e.g. one or more LEDs) within the main body to shine through.

The visual user feedback means, such as the LEDs or the illumination region, may be configured to provide the visual feedback indication(s).

The first feedback indication may include the illumination region continuously emitting white light, for example. The second feedback indication may include the illumination region providing two or more flashes of white light, for example.

Alternatively/additionally, the first and/or feedback indication may be haptic feedback indications.

The aerosol delivery device may comprise a haptic feedback generation unit (e.g. an electric motor and a weight mounted eccentrically on a shaft of the electric motor), which may be configured to provide the haptic feedback indication(s).

Alternatively/additionally, the first and/or second feedback may be audible feedback indications. The aerosol delivery device may comprise a speaker which is configured to produce the audible feedback indication(s).

The first feedback indication may differ from the second feedback indication.

A memory may be provided and may be operatively connected to the control unit. The memory may include non-volatile memory. The memory may include instructions which, when implemented, cause the control unit to perform certain tasks or steps of a method.

The aerosol delivery device may further comprise an airflow (i.e. puff) sensor that is configured to detect a puff (i.e. inhalation from a user). The airflow sensor may be operatively connected to the control unit so as to be able to provide a signal to the control unit that is indicative of a puff state (i.e. puffing or not puffing). The airflow sensor may, for example, be in the form of a pressure sensor or an acoustic sensor. The control unit may control power supply to a heating element in response to airflow detection by the sensor. The control of the power supply may be in the form of activation of the heating element in response to a detected airflow. The airflow sensor may form part of the main body. The heating element may be used in a vaporiser to vaporise an aerosol precursor. The vaporiser may be housed in a vaporising chamber.

The main body may be an elongate body i.e. with a greater length than depth/width. It may have a greater width than depth.

The main body may have a length of between 5 and 30 cm e.g. between 10 and 20 cm such as between 10 and 13 cm. The maximum depth of the main body may be between 5 and 30 mm e.g. between 10 and 20 mm.

The main body may have a front surface that is curved in the transverse dimension. The main body may have a rear surface that is curved in the transverse dimension. The curvatures of the front surface and rear surface may be of the opposite sense to one another. Both front and rear surfaces may be convex in the transverse dimension. They may have an equal radius of curvature.

The radius of curvature of the front surface may be between 10 and 50 mm, preferably between 10 and 40 mm, preferably between 10 and 30 mm, preferably been 10 and 20 mm, more preferably between 10 and 15 mm, more preferably substantially 13.5 mm.

The front and rear surfaces may meet at opposing transverse edges of the main body. This leads to a mandorla-/lemon-/eye-shaped cross sectional shape of the device body.

The transverse edges may have a radius of curvature that is significantly smaller than the radius of curvature of either the front or rear surface. This leads to the transverse edges being substantially "pointed" or "sharp". The transverse edges may have a radius of curvature in the transverse dimension of less than 10 mm, preferably less than 5 mm, preferably less than 2 mm, preferably less than 1 mm.

The transverse edges may extend substantially the full longitudinal length of the main body. However, in some embodiments, the transverse edges may only extend along a longitudinal portion of the main body.

The main body may have a curved longitudinal axis i.e. curved in a direction between the front and rear faces.

The aerosol delivery device may further comprise the component configured to be coupled to the main body. The component may be an aerosol-delivery (e.g. a smoking substitute) component.

The component may be a consumable component. The component may house an aerosol precursor. Specifically, the component may be a component comprising a tank, and the tank may contain the aerosol-precursor. The component may comprise a heating element. The heating element may be used in a vaporiser to vaporise the aerosol-precursor. The vaporiser may be housed in a vaporising chamber.

The component may be configured to be physically and/or electrically coupled to the main body.

The main body may be configured to receive the component in order to physically couple the main body and the component together. For example, the component may be at least partially received in a recess of the main component, such that there is a snap engagement between the main device and the component. Alternatively, the main body and the component may be physically coupled together by screwing one onto the other, or through a bayonet fitting.

The component may comprise one or more engagement portions for engaging with the main body.

The component may comprise an electrical interface for interfacing with a corresponding electrical interface of the main body and for identifying when the component is electrically coupled to the main device. One or both of the electrical interfaces may include one or more electrical contacts. Thus, when the main body is coupled to the component, the electrical interface may configured to transfer electrical power from the main body to the component. The electrical interface may also be used to identify the component from a list of known types.

The main body may be able to detect information about the component coupled to the main body via an RFID reader, a barcode or QR code reader. This interface may be able to identify a characteristic (e.g. a type) of the component. In this respect, the component may include any one or more of an RFID chip, a barcode or QR code, or memory within which is an identifier and which can be interrogated via the interface.

The aerosol delivery device may comprise an airflow path therethrough, the airflow path extending from an air inlet to an outlet. The outlet may be at a mouthpiece portion of the component. In this respect, a user may draw fluid (e.g. air) into and along the airflow path by inhaling at the outlet (i.e. using the mouthpiece).

The airflow path passes the vaporiser between the air inlet to the air outlet.

The airflow path may comprise a first portion extending from the air inlet towards the vaporiser. The second portion of the airflow path passes through the vaporising chamber to a conduit that extends to the air outlet. The conduit may extend along the axial centre of the component.

References to "downstream" in relation to the airflow path are intended to refer to the direction towards the air outlet/outlet portion. Thus the second and third portions of the airflow path are downstream of the first portion of the airflow path. Conversely, references to "upstream" are intended to refer to the direction towards the air inlet. Thus the first portion of the airflow path (and the air inlet) is upstream of the second/third portions of the airflow path (and the air outlet/outlet portion).

References to "upper", "lower", "above" or "below" are intended to refer to the component when in an upright/vertical orientation i.e. with elongate (longitudinal/length) axis of the component vertically aligned and with the mouthpiece vertically uppermost.

The component may comprise a tank for housing an aerosol precursor (e.g. a liquid aerosol precursor). The aerosol precursor may comprise an e-liquid, for example, comprising a base liquid and e.g. nicotine. The base liquid may include propylene glycol and/or vegetable glycerine.

At least a portion of one of the walls defining the tank may be translucent or transparent.

The conduit may extend through the tank with the conduit walls defining an inner region of the tank. In this respect, the tank may surround the conduit e.g. the tank may be annular.

As discussed above, the air flow path passes the vaporiser between the air inlet to the air outlet. The vaporiser may comprise a wick e.g. an elongate wick which may have a cylindrical shape.

The wick may be oriented so as to extend in the direction of the width dimension of the component (perpendicular to the longitudinal axis of the component). Thus the wick may extend in a direction perpendicular to the direction of airflow in the airflow path.

The wick may comprise a porous material. A portion of the wick may be exposed to airflow in the airflow path. The wick may also comprise one or more portions in contact with liquid aerosol precursor stored in the tank. For example, opposing ends of the wick may protrude into the tank and a central portion (between the ends) may extend across the airflow path so as to be exposed to airflow. Thus, fluid may be drawn (e.g. by capillary action) along the wick, from the tank to the exposed portion of the wick.

The heating element may be in the form of a filament wound about the wick (e.g. the filament may extend helically about the wick). The filament may be wound about the exposed portion of the wick. The heating element is electrically connected (or connectable) to the power source. Thus, in operation, the power source may supply electricity to (i.e. apply a voltage across) the heating element so as to heat the heating element. This may cause liquid stored in the wick (i.e. drawn from the tank) to be heated so as to form a vapour and become entrained in airflow along the airflow path. This vapour may subsequently cool to form an aerosol e.g. in the conduit.

In some embodiments, the aerosol-former (e.g. e-liquid) may be replenished by re-filling a tank that is integral with the device (rather than replacing the consumable). Access to the tank (for re-filling of the e-liquid) may be provided via e.g. opening to the tank that is sealable with a closure (e.g. a cap).

In a second aspect, there is provided a system for managing an aerosol delivery device, the system including:
an aerosol delivery device according to the first aspect; and
a mobile device,
wherein, upon receipt of the advertising communication from the aerosol delivery device, the application is configured to establish a communication link with the aerosol delivery device.

The communication link may be a wireless communication link, such as over a Bluetooth™ network, for example.

In some embodiments, the communications link may be established via a wireless interface included in the aerosol delivery device and a wireless interface included in the mobile device.

The mobile device may comprise, for example, a mobile phone, a smart phone, a tablet or a laptop. Establishing the communication link may comprise any suitable steps. For example, it may comprise sharing of an encryption key, a password or a code between the two devices.

The system may further comprise an application server, wherein the aerosol delivery device and/or the mobile device may be configured to communication wirelessly (e.g. via Bluetooth™) with the application server, via a network.

The application installed on the mobile device and the application server may be configured to assist a user with their aerosol delivery device, based on information communicated between the aerosol delivery device, the mobile device and/or the application server.

In a third aspect, there is provided a method of managing an aerosol delivery device, the method comprising the steps of:
detecting that a component is coupled to a main body of the aerosol delivery device;
detecting a predetermined movement of the aerosol delivery device; and then
sending an advertising communication to a mobile device.

The method of the third aspect may be a method of managing the aerosol delivery device of the first aspect.

Similarly to the previous aspects, the advertising communication may be a request to establish a communication link with the mobile device.

Accordingly, the method may further comprise the step of, after receiving the advertising communication at the mobile device, establishing a communication link between an application installed on the mobile device and the aerosol delivery device.

The predetermined movement may be as described above with respect to the first aspect, for example.

In a fourth aspect there is provided a method of using the aerosol delivery device according to the first aspect, the method comprising:
engaging the component with the main body; and
performing a tap sequence on the aerosol delivery device, so as to instruct the aerosol delivery device to pair with a mobile device.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

So that further aspects and features thereof may be appreciated, embodiments will now be discussed in further detail with reference to the accompanying figures, in which:
- Fig. 1A: is a front schematic view of a smoking substitute device;
- Fig. 1B: is a front schematic view of a main body of the smoking substitute device;
- Fig. 1C: is a front schematic view of a consumable component of the smoking substitute device;
- Fig. 2A: is a schematic of the components of the main body;
- Fig. 2B: is a schematic of the components of the consumable component;
- Fig. 3: is a section view of the consumable component;
- Fig. 4: is a perspective view of the device;
- Fig. 5: is a cross-section of the device in a plane perpendicular to the longitudinal axis;
- Fig. 6: shows an example system for managing the smoking substitute device; and
- Fig. 7: is a flowchart of operations which can be performed by the smoking substitute device.

### Detailed description of the embodiments

Aspects and embodiments will now be discussed with reference to the accompanying figures. Further aspects and embodiments will be apparent to those skilled in the art.

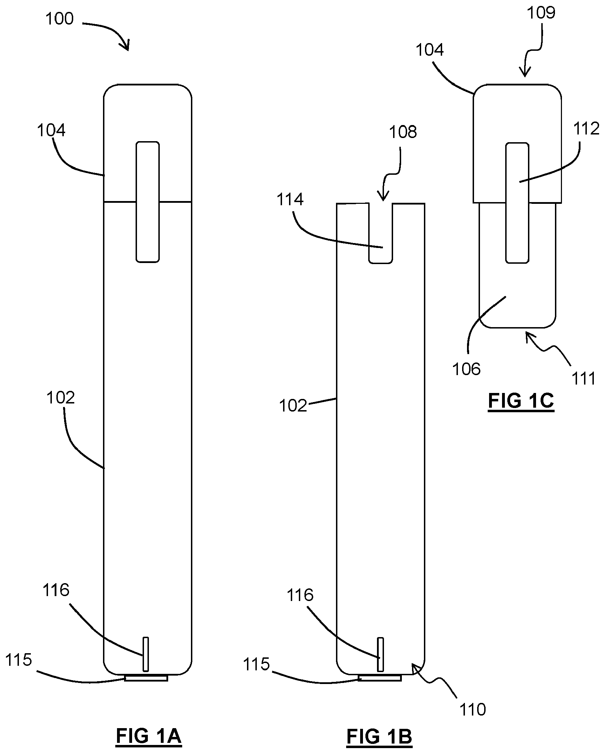

Fig. 1A shows a first embodiment of a smoking substitute device 100. In this example, the smoking substitute device 100 includes a main body 102 and a consumable component 104. The consumable component 104 may alternatively be referred to as a "pod", "cartridge" or "cartomizer".

In this example, the smoking substitute device 100 is a closed system vaping system, wherein the component 104 includes a sealed tank 106 and is intended for single-use only. The component 104 is removably engageable with the main body 102 (i.e. for removal and replacement). Fig. 1A shows the smoking substitute device 100 with the main body 102 physically coupled to the component 104, Fig. 1B shows the main body 102 of the smoking substitute device 100 without the component 104, and Fig. 1C shows the component 104 of the smoking substitute device 100 without the main body 102.

The main body 102 and the component 104 are configured to be physically coupled together by pushing the component 104 into a cavity at an upper end 108 of the main body 102, such that there is an interference fit between the main body 102 and the component 104. In other examples, the main body 102 and the component may be coupled by screwing one onto the other, or through a bayonet fitting.

The component 104 includes a mouthpiece (not shown in Fig. 1A, 1B or 1C) at an upper end 109 of the component 104, and one or more air inlets (not shown) in fluid communication with the mouthpiece such that air can be drawn into and through the component 104 when a user inhales through the mouthpiece. The tank 106 containing e-liquid is located at the lower end 111 of the component 104.

The tank 106 includes a window 112, which allows the amount of e-liquid in the tank 106 to be visually assessed. The main body 102 includes a slot 114 so that the window 112 of the component 104 can be seen whilst the rest of the tank 106 is obscured from view when the component 104 is inserted into the cavity at the upper end 108 of the main body 102.

The lower end 110 of the main body 102 also includes a light 116 (e.g. an LED) located behind a small translucent cover. The light 116 may be configured to illuminate when the smoking substitute device 100 is activated. Whilst not shown, the component 104 may identify itself to the main body 102, via an electrical interface, RFID chip, or barcode.

The lower end 110 of the main body 102 also includes a charging connection 115, which is usable to charge a battery within the main body 102. The charging connection 115 can also be used to transfer data to and from the main body, for example to update firmware thereon.

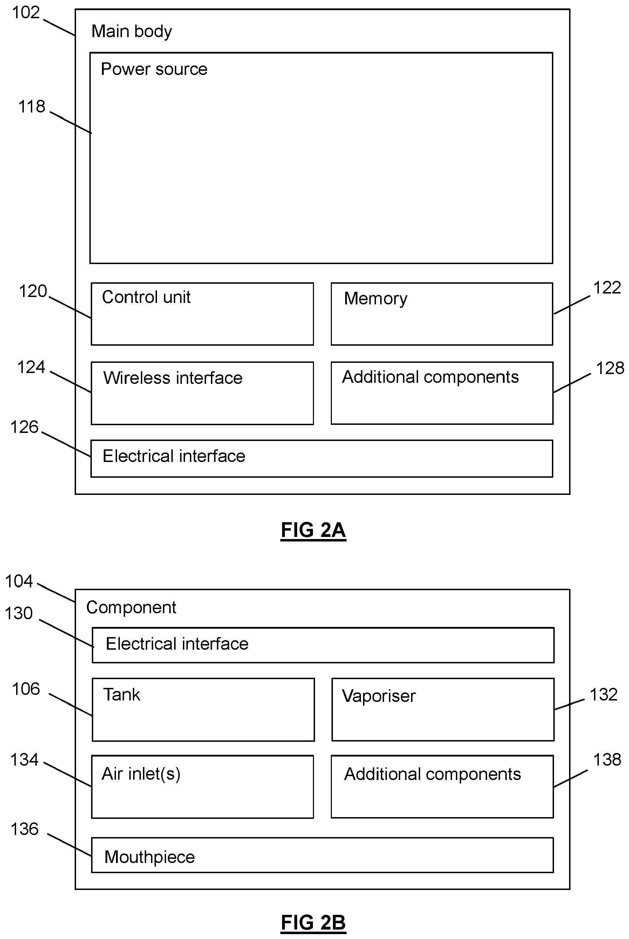

Figs. 2A and 2B are schematic drawings of the main body 102 and component 104. As is apparent from Fig. 2A, the main body 102 includes a power source 118, a control unit 120, a memory 122, a wireless interface 124, an electrical interface 126, and, optionally, one or more additional components 128.

The power source 118 is preferably a battery, more preferably a rechargeable battery. The control unit 120 may include a microprocessor, for example. The memory 122 preferably includes non-volatile memory. The memory may include instructions which, when implemented, cause the control unit 120 to perform certain tasks or steps of a method.

The wireless interface 124 is preferably configured to communicate wirelessly with another device, for example a mobile device, e.g. via Bluetooth®. To this end, the wireless interface 124 could include a Bluetooth® antenna. Other wireless communication interfaces, e.g. WiFi®, are also possible. The wireless interface 124 may also be configured to communicate wirelessly with a remote server.

The electrical interface 126 of the main body 102 may include one or more electrical contacts. The electrical interface 126 may be located in a base of the aperture in the upper end 108 of the main body 102. When the main body 102 is physically coupled to the component 104, the electrical interface 126 is configured to transfer electrical power from the power source 118 to the component 104 (i.e. upon activation of the smoking substitute device 100).

The electrical interface 126 may also be used to identify the component 104 from a list of known components. For example, the component 104 may be a particular flavour and/or have a certain concentration of nicotine (which may be identified by the electrical interface 126). This can be indicated to the control unit 120 of the main body 102 when the component 104 is connected to the main body 102. Additionally, or alternatively, there may be a separate communication interface provided in the main body 102 and a corresponding communication interface in the component 104 such that, when connected, the component 104 can identify itself to the main body 102.

The additional components 128 of the main body 102 may comprise the light 116 discussed above.

The additional components 128 of the main body 102 also comprises the charging connection 115 configured to receive power from the charging station (i.e. when the power source 118 is a rechargeable battery). This may be located at the lower end 110 of the main body 102.

The additional components 128 of the main body 102 may, if the power source 118 is a rechargeable battery, include a battery charging control circuit, for controlling the charging of the rechargeable battery. However, a battery charging control circuit could equally be located in the charging station (if present).

The additional components 128 of the main body 102 may include a sensor, such as an airflow (i.e. puff) sensor for detecting airflow in the smoking substitute device 100, e.g. caused by a user inhaling through a mouthpiece 136 of the component 104. The smoking substitute device 100 may be configured to be activated when airflow is detected by the airflow sensor. This sensor could alternatively be included in the component 104. The airflow sensor can be used to determine, for example, how heavily a user draws on the mouthpiece or how many times a user draws on the mouthpiece in a particular time period.

The additional components 128 of the main body 102 may include a user input, e.g. a button. The smoking substitute device 100 may be configured to be activated when a user interacts with the user input (e.g. presses the button). This provides an alternative to the airflow sensor as a mechanism for activating the smoking substitute device 100.

The additional components 128 of the main body 102 may include an accelerometer. The accelerometer may be configured to sense movement of the smoking substitute device.

As shown in Fig. 2B, the component 104 includes the tank 106, an electrical interface 130, a vaporiser 132, one or more air inlets 134, a mouthpiece 136, and one or more additional components 138.

The electrical interface 130 of the component 104 may include one or more electrical contacts. The electrical interface 126 of the main body 102 and an electrical interface 130 of the component 104 are configured to contact each other and thereby electrically couple the main body 102 to the component 104 when the lower end 111 of the component 104 is inserted into the upper end 108 of the main body 102 (as shown in Fig. 1A). In this way, electrical energy (e.g. in the form of an electrical current) is able to be supplied from the power source 118 in the main body 102 to the vaporiser 132 in the component 104.

The vaporiser 132 is configured to heat and vaporise e-liquid contained in the tank 106 using electrical energy supplied from the power source 118. As will be described further below, the vaporiser 132 includes a heating filament and a wick. The wick draws e-liquid from the tank 106 and the heating filament heats the e-liquid to vaporise the e-liquid.

The one or more air inlets 134 are preferably configured to allow air to be drawn into the smoking substitute device 100, when a user inhales through the mouthpiece 136. When the component 104 is physically coupled to the main body 102, the air inlets 134 receive air, which flows to the air inlets 134 along a gap between the main body 102 and the lower end 111 of the component 104.

In operation, a user activates the smoking substitute device 100, e.g. through interaction with a user input forming part of the main body 102 or by inhaling through the mouthpiece 136 as described above. Upon activation, the control unit 120 may supply electrical energy from the power source 118 to the vaporiser 132 (via electrical interfaces 126, 130), which may cause the vaporiser 132 to heat e-liquid drawn from the tank 106 to produce a vapour which is inhaled by a user through the mouthpiece 136.

An example of one of the one or more additional components 138 of the component 104 is an interface for obtaining an identifier of the component 104. As discussed above, this interface may be, for example, an RFID reader, a barcode, a QR code reader, or an electronic interface which is able to identify the component. The component 104 may, therefore include any one or more of an RFID chip, a barcode or QR code, or memory within which is an identifier and which can be interrogated via the electronic interface in the main body 102.

It should be appreciated that the smoking substitute device 100 shown in figures 1A to 2B is just one exemplary implementation of a smoking substitute device. For example, the device could otherwise be in the form of an entirely disposable (single-use) system.

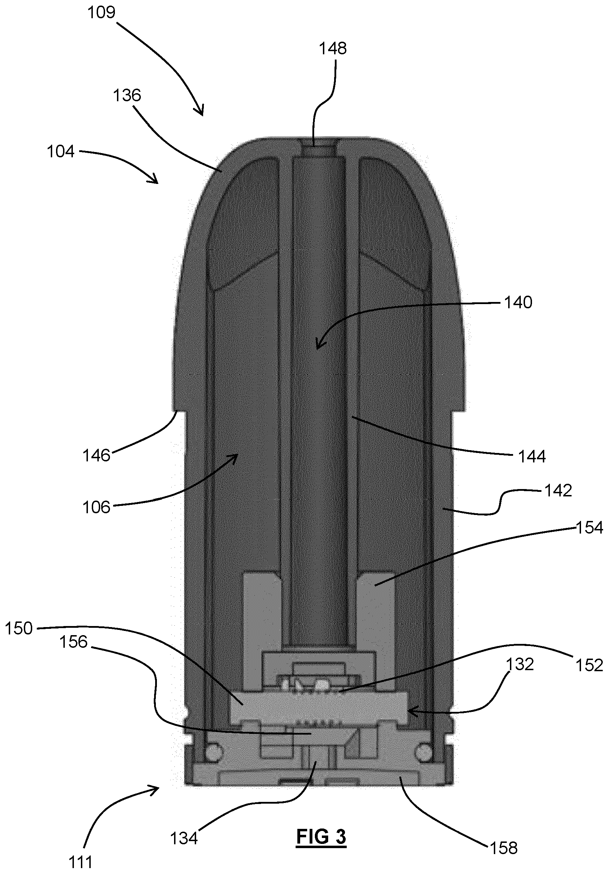

Fig. 3 is a section view of the component 104 described above. The component 104 comprises a tank 106 for storing e-liquid, a mouthpiece 136 and a conduit 140 extending along a longitudinal axis of the component 104. In the illustrated embodiment the conduit 140 is in the form of a tube having a substantially circular transverse cross-section (i.e. transverse to the longitudinal axis). The tank 106 surrounds the conduit 140, such that the conduit 140 extends centrally through the tank 106.

A tank housing 142 of the tank 106 defines an outer casing of the component 104, whilst a conduit wall 144 defines the conduit 140. The tank housing 142 extends from the lower end 111 of the component 104 to the mouthpiece 136 at the upper end 109 of the component 104. At the junction between the mouthpiece 136 and the tank housing 142, the mouthpiece 136 is wider than the tank housing 142, so as to define a lip 146 that overhangs the tank housing 142. This lip 146 acts as a stop feature when the component 104 is inserted into the main body 102 (i.e. by contact with an upper edge of the main body 102).

The tank 106, the conduit 140 and the mouthpiece 136 are integrally formed with each other so as to form a single unitary component and may e.g. be formed by way of an injection moulding process. Such a component may be formed of a thermoplastic material such as polypropylene.

The mouthpiece 136 comprises a mouthpiece aperture 148 defining an outlet of the conduit 140. The vaporiser 132 is fluidly connected to the mouthpiece aperture 148 and is located in a vaporising chamber 156 of the component 104. The vaporising chamber 156 is downstream of the inlet 134 of the component 104 and is fluidly connected to the mouthpiece aperture 148 (i.e. outlet) by the conduit 140.

The vaporiser 132 comprises a porous wick 150 and a heater filament 152 coiled around the porous wick 150. The wick 150 extends transversely across the chamber vaporising 156 between sidewalls of the chamber 156 which form part of an inner sleeve 154 of an insert 158 that defines the lower end 111 of the component 104 that connects with the main body 102. The insert 158 is inserted into an open lower end of the tank 106 so as to seal against the tank housing 142.

In this way, the inner sleeve 154 projects into the tank 106 and seals with the conduit 140 (around the conduit wall 144) so as to separate the vaporising chamber 156 from the e-liquid in the tank 106. Ends of the wick 150 project through apertures in the inner sleeve 154 and into the tank 106 so as to be in contact with the e-liquid in the tank 106. In this way, e-liquid is transported along the wick 150 (e.g. by capillary action) to a central portion of the wick 150 that is exposed to airflow through the vaporising chamber 156. The transported e-liquid is heated by the heater filament 152 (when activated e.g. by detection of inhalation), which causes the e-liquid to be vaporised and to be entrained in air flowing past the wick 150. This vaporised liquid may cool to form an aerosol in the conduit 140, which may then be inhaled by a user.

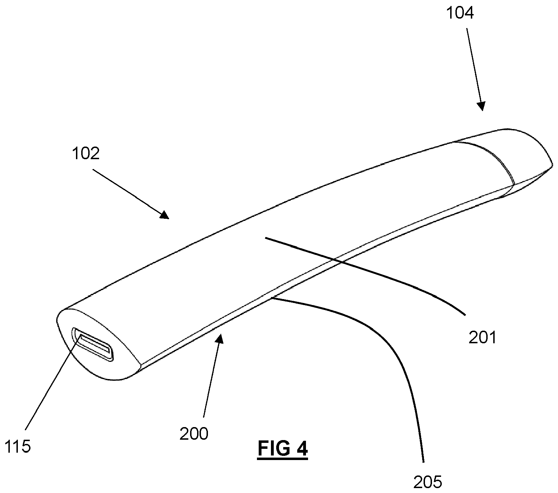

Fig. 4 shows a perspective view of an embodiment of the main body 102 engaged with the component 104 at the upper end 108. The main body 102 includes a charging connection 115 at the lower end 110.

The front surface 201 of a housing 200 of the main body 102 is curved in the transverse dimension. The rear surface 202 of the housing 200 is curved in the transverse dimension. The curvatures of the front surface 201 and rear surface 202 are of the opposite sense to one another. Both front and rear surfaces 201, 202 are convex in the transverse dimension. This leads to a mandorla-/lemon-/eye-shaped cross sectional shape of the main body 102.

The front surface 201 and rear surface 202 meet at two transverse edges 205. The transverse edges 205 have a radius of curvature that is significantly smaller than the radius of curvature of either the front 201 or rear surface 202. This leads to the transverse edges being substantially "pointed" or "sharp". The transverse edges may have a radius of curvature in the transverse dimension of less than 1 millimetre.

As illustrated in Fig. 4, the transverse edges 205 extend substantially the full longitudinal length of the main body 102.

The front surface 201 of the main body 102 may include visual user feedback means.

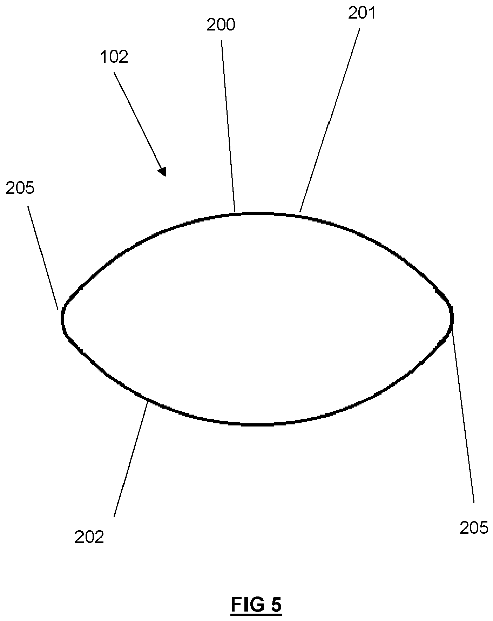

Fig. 5 illustrates a schematic transverse cross section through the main body 102 of Fig. 4, in accordance with an embodiment. The front surface 201 and rear surface 202 are shown meeting at the transverse edges 205 on either side of the housing 200 of the main body 102. The radius of curvature in the transverse dimension of the front surface 201 is equal to the radius of curvature in the transverse dimension of the rear surface 202.

The radius of curvature of the front surface 201 may be between 10 and 15 mm.

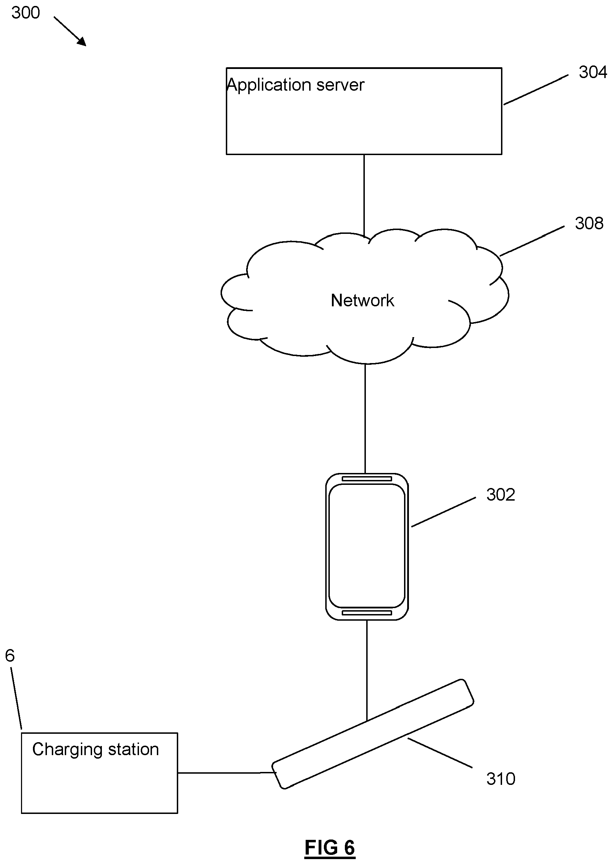

Fig. 6 shows an example system 300 for managing a smoking substitute device 310, such as smoking substitute device 100 described with reference to the previous figures. The system 300 as shown in Fig. 6 includes a mobile device 302, an application server 304, an optional charging station 306, as well as the smoking substitute device 310.

The smoking substitute device 310 is configured to communicate wirelessly, e.g. via Bluetooth™, with an application (or "app") installed on the mobile device 302, e.g. via a suitable wireless interface (not shown) on the mobile device 302. The mobile device 302 may be a mobile phone, for example. The application on the mobile phone is configured to communicate with the application server 304, via a network 308. The application server 304 may utilise cloud storage, for example.

The network 308 may include a cellular network and/or the internet.

In other examples, the smoking substitute device 310 may be configured to communicate with the application server 304 via a connection that does not involve the mobile device 302, e.g. via a narrowband internet of things ("NB-loT") connection.

A skilled person would readily appreciate that the mobile device 302 may be configured to communicate via the network 308 according to various communication channels, preferably a wireless communication channel such as via a cellular network (e.g. according to a standard protocol, such as 3G or 4G) or via a WiFi network.

The app installed on the mobile device and the application server 304 may be configured to assist a user with their smoking substitute device 310, based on information communicated between the smoking substitute device 310 and the app and/or information communicated between the app and the application server 304.

The charging station 306 (if present) may be configured to charge (and optionally communicate with) the smoking substitute device 310, via a charging port on the smoking substitute device 310. The charging port on the smoking substitute device 310 may be a USB port, for example, which may allow the smoking substitute device to be charged by any USB-compatible device capable of delivering power to the smoking substitute device 310 via a suitable USB cable (in this case the USB-compatible device would be acting as the charging station 306). Alternatively, the charging station could be a docking station specifically configured to dock with the smoking substitute device 310 and charge the smoking substitute device 310 via the charging port on the smoking substitute device 310.

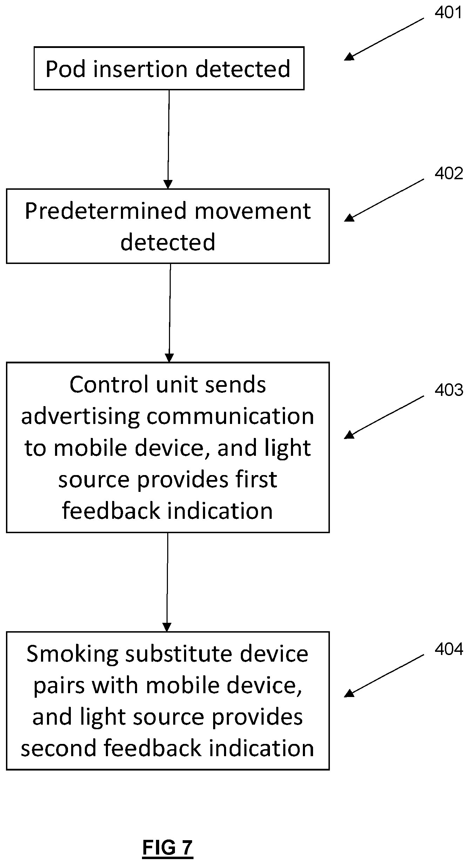

Fig. 7 is a flowchart of operations which may be performed by the smoking substitute device 100, 310. Specifically, the smoking substitute device may follow the operations of Fig. 7 when a user wishes to pair the smoking substitute device with a mobile device.

At step 401, the control unit 120 in the main body 102 of the smoking substitute device 100 determines that a consumable component 104 (e.g. pod) has been inserted into the main body 102 of the smoking substitute device 100. The control unit 120 may store this information in memory 122.

At step 402, a predetermined movement of the smoking substitute device 110 is detected by an accelerometer in the main body 102. The predetermined movement may be a predetermined tapping sequence performed within a predetermined "tap sequence" length of time, such as continuous tapping for 5 or more seconds. The predetermined movement may be stored in memory 122, and the control unit may compare the detected movement of the smoking substitute device 110 with the predetermined movement stored in memory 122 to determine whether the detected movement is equivalent to the stored predetermined movement.

The control unit may continually monitor for a consumable component insertion and for the predetermined movement.

If the control unit 120 detects a consumable component insertion (i.e. step 401), followed by the predetermined movement (i.e. step 402) within a predetermined period of time (e.g. 10 seconds), the control unit 120 determines that the user wishes to pair the smoking substitute device with the mobile device and the method moves to step 403.

If step 402 is not performed within the predetermined period of time from step 401, the method does not proceed to step 403. This prevents the user accidently instructing the pairing of the smoking substitute device with a mobile device, as there is a two-step authentication process.

At step 403, the control unit 102 determines that the user wishes to pair the smoking substitute device 100 with the mobile device (such as mobile device 302 in Fig. 6), and sends an advertising wireless communication to the mobile device requesting pairing of the smoking substitute device and the mobile device.

Also in step 403, and at the same time as sending the advertising wireless communication, the smoking substitute device provides feedback to the user that the smoking substitute device has understood the user's instruction to pair with the mobile device, and is requesting the pairing of the two devices.

Accordingly, in the example shown in Fig. 7, the light 116 in the main body 102 provides a first feedback visual indication to the user. For example, the light 116 may emit continuous white light.

If the mobile device 302 permits communication with the smoking substitute device 310, a wireless communication link is enabled between the two devices (step 404). Also in step 404, when the wireless communication link is enabled, the second feedback indication is provided by the light 116. Specifically, the light 116 stops emitting continuous white light (the first feedback indication) and instead emits three flashes of white light. This second feedback indication informs the user that the smoking substitute device is paired with the mobile device.

While exemplary embodiments have been described above, many equivalent modifications and variations will be apparent to those skilled in the art when given this disclosure. Accordingly, the exemplary embodiments set forth above are considered to be illustrative and not limiting.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. An aerosol delivery device comprising a main body, the main body having a control unit and a movement sensor configured to sense movement of the aerosol delivery device;
wherein the control unit is configured to send an advertising communication to a mobile device when:
a component is coupled to the main body; and
a predetermined movement of the aerosol delivery device is detected using the movement sensor.

2. The aerosol delivery device of claim 1, wherein the control unit is configured to send the advertising communication to the mobile device only when:
a component is coupled to the main body; and
the predetermined movement of the aerosol delivery device is detected using the movement sensor.

3. The aerosol delivery device of claim 1 or claim 2, wherein the control unit is configured to send the advertising communication to the mobile device when a change in state of the aerosol delivery device is detected, the change in state being from a disassembled state in which a component is not coupled to the main body, to an assembled state in which a component is coupled to the main body.

4. The aerosol delivery device of claim 3, wherein the control unit is configured to send the advertising communication to the mobile device when the change in state of the aerosol delivery device is detected before the predetermined movement of the aerosol delivery device is detected.

5. The aerosol delivery device of claim 3 or claim 4, wherein the control unit is configured to send the advertising communication to the mobile device when the detection of the change in state of the aerosol delivery device and the detection of the predetermined movement of the aerosol delivery device are within a predetermined period of time.

6. The aerosol delivery device of any preceding claim, wherein the movement sensor includes at least one accelerometer.

7. The aerosol delivery device of any preceding claim, wherein the predetermined movement detected using the movement sensor includes a tap of the aerosol delivery device.

8. The aerosol delivery device of any preceding claim, wherein the predetermined movement of the movement sensor includes a sequence of taps of the aerosol delivery device.

9. The aerosol delivery device of any preceding claim, wherein the smoking substitute is configured to provide a first feedback indication to the user when both the predetermined movement is detected and a component is coupled to the main body.

10. The aerosol delivery device of any preceding claim, wherein the aerosol delivery device is configured to provide a second feedback indication to the user when a communication link is established between the aerosol delivery device and the mobile device.

11. The aerosol delivery device of claim 10, wherein the first and/or second feedback indication is a visual indication.

12. The aerosol delivery device of any preceding claim, further comprising a component configured to be coupled to the main body, wherein the component is a consumable component housing an aerosol precursor.

13. A system for managing an aerosol delivery device, the system including:
an aerosol delivery device according to any preceding claim; and
a mobile device,
wherein, upon receipt of the advertising communication from the aerosol delivery device, the application is configured to establish a communication link with the aerosol delivery device.

14. A method of managing an aerosol delivery device, the method comprising the steps of:
detecting that a component is coupled to a main body of the aerosol delivery device;
detecting a predetermined movement of the aerosol delivery device; and then
sending an advertising communication to a mobile device.

15. A method of using the aerosol delivery device according to claim 12, the method comprising:
engaging the component with the main body; and
performing a tap sequence on the aerosol delivery device, so as to instruct the aerosol delivery device to pair with a mobile device.
